# EUROPÄISCHE PATENTSCHRIFT

(11) **EP 3 934 965 B1**
(45) Veröffentlichungstag und Bekanntmachung des Hinweises auf die Patenterteilung: **01.05.2024**
(21) Anmeldenummer: 20709527.4
(22) Anmeldetag: 02.03.2020
(51) Int. Cl.: B62D 6/00, B62D 5/04, B62D 5/00

(54) **VERFAHREN ZUR STEUERUNG EINES STEER-BY-WIRE-LENKSYSTEMS UND STEER-BY-WIRE-LENKSYSTEM FÜR EIN KRAFTFAHRZEUG**
METHOD FOR CONTROLLING A STEER-BY-WIRE STEERING SYSTEM AND STEER-BY-WIRE STEERING SYSTEM FOR A MOTOR VEHICLE
PROCÉDÉ DE COMMANDE D'UN SYSTÈME DE DIRECTION À COMMANDE PAR CÂBLE ET SYSTÈME DE DIRECTION À COMMANDE PAR CÂBLE POUR UN VÉHICULE À MOTEUR

(30) Priorität: 06.03.2019 DE 102019203039
(43) Veröffentlichungstag der Anmeldung: 12.01.2022
(73) Patentinhaber: thyssenkrupp AG, 45143 Essen (DE); thyssenkrupp Presta AG, 9492 Eschen (LI)
(72) Erfinder: KAKAS, Peter, 1118 Budapest (HU); VARGA, Àdám, 1118 Budapest (HU); VIZER, Daniel, 2064 Csabdi (HU)
(74) Vertreter: thyssenkrupp Intellectual Property GmbH
(86) Internationale Anmeldenummer: PCT/EP2020/055451
(87) Internationale Veröffentlichungsnummer: WO 2020/178243

(56) Entgegenhaltungen:
- DE-A1- 19 838 490
- DE-A1-102016 009 684

## Beschreibung

Die Erfindung betrifft ein Verfahren zur Steuerung eines Steer-by-Wire-Lenksystems nach dem Oberbegriff des Anspruchs 1 und ein Steer-by-Wire-Lenksystem für ein Kraftfahrzeug nach dem Oberbegriff des Anspruchs 10.

In Steer-by-Wire-Lenksystemen für Kraftfahrzeuge besteht keine mechanische Verbindung mehr zwischen einem vom Fahrer bedienten Lenkrad und den gelenkten Rädern. Stattdessen wird die Stellung der gelenkten Räder durch einen elektronisch geregelten Lenksteller eingestellt, um das Fahrzeug auf der gewünschten Bahn zu führen. Zu diesem Zweck stellt ein mit der Lenksäule verbundener Feedback-Aktuator ein Sollstellungssignal bereit, das die Lenkabsicht des Fahrers repräsentiert. Der Lenksteller wird dann über einen Stellungsregler mit ausreichender Leistung und Bandbreite derart mit einem Drehmoment-Anforderungssignal angesteuert, dass die gelenkten Räder in die Sollstellung eingeregelt werden.

Diese sicherheitskritische Regelungsaufgabe muss eine hohe Ausfallsicherheit gewährleisten, damit das Fahrzeug trotz der fehlenden mechanischen Verbindung auch im Falle eines fehlerhaften Stellungsreglers lenkbar bleibt und der Fahrer die Kontrolle über das Fahrzeug behält. Aus diesem Grunde ist es wichtig Sicherheitskonzepte für den Regelkreis des Lenkstellers zu entwickeln.

Aus US 9 598 102 B2 ist ein Verfahren zur Abschwächung von Unregelmäßigkeiten in einem ersten Steuerungsbefehl zum Steuern eines Servolenkungssystems eines Fahrzeugs bekannt. Das Verfahren erzeugt ein Bereichssignal, das einen Bereich von Befehlswerten auf Grundlage einer Vielzahl von Eingabesignalen kennzeichnet, und ermittelt, ob der erste Steuerungsbefehl länger als eine vorbestimmte Zeitspanne außerhalb des Bereichs liegt. Ein zweiter Steuerungsbefehl wird auf Grundlage einer Teilmenge der Vielzahl von Eingabesignalen erzeugt und an das Servolenkungssystem in Reaktion darauf gesandt, dass festgestellt wird, dass der erste Steuerungsbefehl für mehr als die vorbestimmte Zeitspanne außerhalb des Bereichs liegt. Nachteilig ist, dass das vorbekannte Verfahren die Fahrsituation, in der sich das Kraftfahrzeug befindet, nur unzureichend berücksichtigt, so dass das erzeugte Bereichssignal für eine Vielzahl von unterschiedlichen Fahrsituationen, wie beispielsweise Kurvenfahrt und Geradeausfahrt, gleichermaßen anwendbar sein muss. Unberücksichtigt bleibt ferner welche Spurabweichungen fehlerhafte erste Steuerungsbefehle verursachen, bevor der vorgegebene Bereich verlassen wird. Somit können fehlerhafte Steuerungsbefehle erst spät aufgrund von großen Unregelmäßigkeiten erkannt werden.

US 8 660 754 B2 beschreibt ein Lenksystem für ein Fahrzeug, bei dem die Lenkgeschwindigkeit basierend auf der Summe eines Lenkradgeschwindigkeitssignals und einem Korrektursignal bestimmt wird. Das Korrektursignal hängt von dem Winkelfehler zwischen der Lenkradstellung und der Stellung eines gelenkten Elements ab, der abhängig von der Lenkradgeschwindigkeit verstärkt oder abgeschwächt wird. Dadurch wird erreicht, dass Lenkradgeschwindigkeiten unterhalb eines bestimmten Schwellenwertes zu keiner Korrektur des Winkelfehlers führen und das Risiko für gefährliche Situationen bei Ausfall eines Stellungssensors des gelenkten Elements reduziert wird. Nachteilig ist, dass der Winkelfehler bei unveränderter Lenkradstellung, insbesondere bei Geradeausfahrt, beliebig lange unkorrigiert bestehen bleibt.

Aufgabe der Erfindung ist es daher, ein Verfahren zur Steuerung eines Steer-by-Wire-Lenksystems und ein Steer-by-Wire-Lenksystem für ein Kraftfahrzeug anzugeben, durch das die Sicherheit und Zuverlässigkeit der Lenkung verbessert wird.

Diese Aufgabe wird gelöst durch ein Verfahren zur Steuerung eines Steer-by-Wire-Lenksystems mit den Merkmalen des Anspruchs 1, sowie durch ein Steer-by-Wire-Lenksystem für ein Kraftfahrzeug mit den Merkmalen des Anspruchs 10.

Hierdurch wird eine Steuerung eines Steer-by-Wire-Lenksystems geschaffen, die eine verbesserte Fehlererkennung und Fehlerkorrektur bei Lenkwinkelabweichungen ermöglicht. Insbesondere werden geringfügige, aber andauernde Lenkwinkelabweichungen zwischen Lenkrad und gelenkten Rädern zuverlässig korrigiert. Das erfindungsgemäße Verfahren sieht hierfür die Berechnung einer kumulierten Abweichungsgröße als Zeitintegral über die Regelabweichung des Stellungsreglers in Kombination mit einem zum Stellungsregler redundant ausgebildeten Referenzregler vor. In Abhängigkeit vom Wert der kumulierten Abweichungsgröße wird das von dem Stellungsregler vorgegebene Drehmoment-Anforderungssignal zur Ansteuerung des Lenkstellers durch ein von dem Referenzregler bestimmtes, sicheres Referenz-Drehmomentsignal ersetzt. Das Referenzdrehmoment ist geeignet, den Soll-Lenkwinkel des Lenkstellers mit einer tolerierbaren Regelabweichung einzuregeln. Zugleich ist das Referenzdrehmoment sicher in dem Sinne, dass es keine plötzlichen oder unvorhergesehenen Änderungen des Fahrzeugzustands verursacht und das Fahrzeug steuerbar bleibt. Durch das erfindungsgemäße Verfahren werden auch geringfügige systematische Lenkwinkelfehler ausgeglichen. Das Lenksystem eignet sich dadurch insbesondere auch für den Einsatz bei zumindest teilweise autonom fahrenden Kraftfahrzeugen, bei denen Lenkwinkelfehler nicht mehr manuell durch den Fahrer kompensiert werden können.

Vorzugsweise wird die kumulierte Abweichungsgröße unter Gewichtung der Regelabweichung des Stellungsreglers mit einer Fahrgeschwindigkeit des Fahrzeugs berechnet. Durch die Gewichtung der Regelabweichung mit der Fahrgeschwindigkeit im Zeitintegral kann die Auswirkung der Regelabweichung auf die Fahrspur des Kraftfahrzeugs in der jeweiligen Fahrsituation berücksichtigt werden. Eine gleich große Regelabweichung führt durch die Gewichtung bei höheren Geschwindigkeiten somit zu einer erhöhten kumulierten Abweichungsgröße. Der Referenzregler greift daher bei höheren Geschwindigkeiten früher ein, um die resultierende Fahrspurabweichung zu begrenzen. Durch die Gewichtung mit der Fahrgeschwindigkeit wird folglich eine kontinuierliche Fahrspurabweichungsüberwachung ermöglicht.

Der Fehlerzustand des Stellungsreglers kann dadurch festgestellt werden, dass die kumulierte Abweichungsgröße einen wählbaren Schwellenwert überschreitet. Durch Wahl des Schwellenwertes ist die Toleranz der Fehlerüberwachung einstellbar. Durch einen höheren Schwellenwert können beispielsweise auch Lenkeingriffe von weiteren Assistenzsystemen, wie aktiven Lenksystemen toleriert werden. Insbesondere kann der Schwellenwert abhängig von der Fahrgeschwindigkeit des Fahrzeugs gewählt werden. Dadurch können korrigierende Lenkfunktionen einer aktiven Lenkung geschwindigkeitsangepasst toleriert werden.

Vorzugsweise wird bei der Bestimmung des Referenz-Drehmomentsignals die momentane Winkelgeschwindigkeit des Lenkstellers berücksichtigt. Dadurch kann der Referenzregler schneller auf einen sich ändernden Ist-Linkwinkel durch externe Einflüsse, wie beispielsweise durch einen Bordsteinkontakt, reagieren.

Vorzugsweise enthält das Referenz-Drehmomentsignal einen zur Regelabweichung zwischen Soll- und Ist-Lenkwinkel proportionalen Anteil und einen von der Winkelgeschwindigkeit des Lenkstellers abhängigen Anteil. Der Referenzregler kann somit als PD-Regler ausgebildet sein, der Überschwingungen der Regelung vermeidet oder zumindest reduziert. Insbesondere kann vorgesehen sein, dass der Referenzregler zur Verringerung der Regelabweichung optimiert angepasst ist.

Die Auswahleinrichtung kann vorzugsweise während der Umschaltvorgänge das überprüfte Drehmoment-Anforderungssignal zwischen dem Referenz-Drehmomentsignal und dem Drehmoment-Anforderungssignal interpolieren. Dadurch wird eine sprunghafte Änderung des Lenkstellermoments durch den Eingriff des Referenzreglers vermieden.

Weitere Ausgestaltungen der Erfindung sind der nachfolgenden Beschreibung und den Unteransprüchen zu entnehmen.

Die Erfindung wird nachstehend anhand des in den beigefügten Abbildungen dargestellten Ausführungsbeispiels näher erläutert.
- Fig. 1: zeigt schematisch den Aufbau eines Steer-by-Wire-Lenksystems nach einem Ausführungsbeispiel der Erfindung,
- Fig. 2: zeigt schematisch den Aufbau der Ansteuereinheit gemäß dem Ausführungsbeispiel nach Fig. 1,
- Fig. 3: zeigt schematisch den Aufbau der Überprüfungseinrichtung gemäß dem Ausführungsbeispiel nach Fig. 1 und 2.

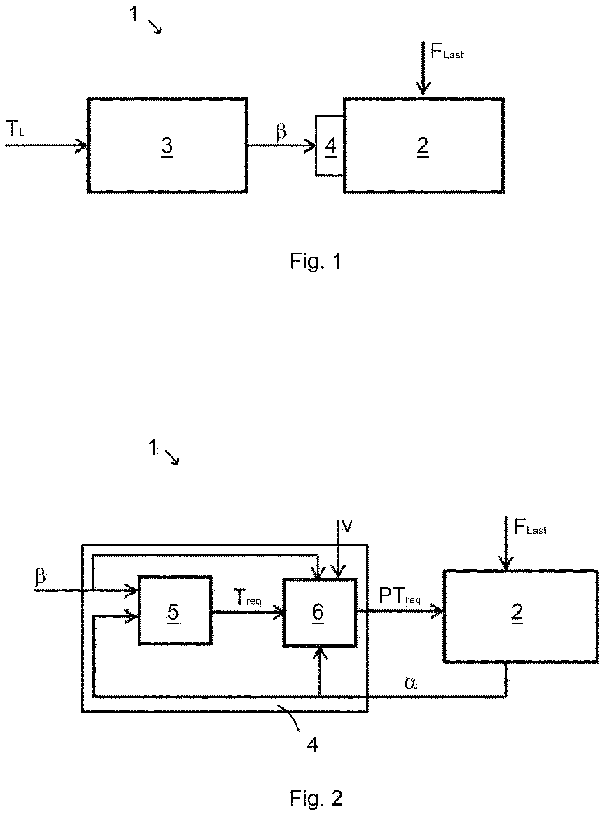

In Fig. 1 ist schematisch der Aufbau eines Steer-by-Wire-Lenksystems für ein Kraftfahrzeug gemäß einem Ausführungsbeispiel der Erfindung dargestellt. Das Steer-by-Wire-Lenksystem 1 weist einen auf gelenkte Räder wirkenden, elektronisch regelbaren Lenksteller 2 auf, der einen Ist-Lenkwinkel α der gelenkten Räder erfasst (vgl. Fig. 2), und einen Feedback-Aktuator 3 auf, der einen über ein Lenkrad eingestellten Soll-Lenkwinkel β erfasst. Ferner ist eine Ansteuereinheit 4 vorgesehen, die den Lenksteller 2 in Abhängigkeit des Soll-Lenkwinkels β und des Ist-Lenkwinkels α mit einem überprüften Drehmoment-Anforderungssignal PT_{req} ansteuert.

Der Feedback-Aktuator 3 wird vom Fahrer mittels eines auf ein Lenkrad ausgeübten Lenkmoments T_{L} als Eingangsgröße beaufschlagt. Der Feedback-Aktuator 3 kann dazu ausgebildet sein, die durch das Lenkmoment T_{L} bewirkte Verstellung des Lenkrads mittels eines Drehwinkelsensors zu messen und dem gemessenen Winkel einen Soll-Lenkwinkel β zuordnen. Alternativ kann der Feedback-Aktuator das Lenkmoment T_{L} messen und diesem einen Soll-Lenkwinkel β zuordnen. Der Soll-Lenkwinkel β wird als Ausgangssignal des Feedback-Aktuators 3 an die Ansteuereinheit 4 übertragen. Die Ansteuereinheit 4 kann als integriertes Steuergerät Teil des Lenkstellers 2 sein oder als ein separates Steuergerät ausgebildet sein. Auf den Lenksteller 2 wirkt seitens der gelenkten Räder eine Lenklast F_{Last} ein, die einer Verstellung des Ist-Lenkwinkels α durch den Lenksteller 2 entgegenwirkt und/oder den Ist-Lenkwinkel α abhängig von der Fahrsituation mit unterschiedlichen Störungen beaufschlagt. Derartige externe Lenklasten können beispielsweise durch Rückstellkräfte in die Geradeausstellung bei Kurvenfahrt oder durch Kräfte aufgrund von Seitenwind verursacht sein.

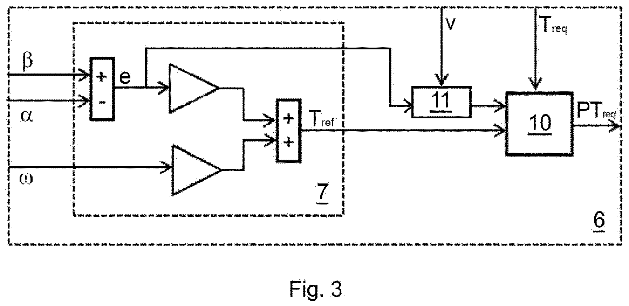

Der erfindungsgemäße Aufbau und die Funktionsweise der Ansteuereinheit 4 wird anhand der Fig. 2 und 3 näher erläutert. Die Ansteuereinheit 4 weist einen Stellungsregler 5 und eine Überprüfungseinrichtung 6 auf, wobei die Überprüfungseinrichtung 6 einen Referenzregler 7, eine Berechnungseinheit 11 und eine Auswahleinrichtung 10 enthält (vgl. Fig. 3).

Die Ansteuereinheit 4 führt zur Steuerung des Steer-by-Wire-Lenksystems 1 das folgende Verfahren aus.

Der Stellungsregler 5 der Ansteuereinheit 4 bestimmt basierend zumindest auf dem Soll-Lenkwinkel β und dem Ist-Lenkwinkel α ein Drehmoment-Anforderungssignal T_{req}. Das Drehmoment-Anforderungssignal T_{req} wird anschließend durch die Überprüfungseinrichtung 6 der Ansteuereinheit 4 daraufhin überprüft, ob ein Fehlerzustand des Stellungsreglers 5 vorliegt. Die Überprüfungseinrichtung 6 stellt durch Auswertung einer kumulierten Abweichungsgrö-ße, die von der Berechnungseinheit 11 der Überprüfungseinrichtung 6 als Zeitintegral über eine Regelabweichung e zwischen Soll-Lenkwinkel β und Ist-Lenkwinkel α berechnet wird, fest, ob der Fehlerzustand vorliegt. Wenn der Fehlerzustand nicht festgestellt wurde, wählt die Auswahleinrichtung 10 der Überprüfungseinrichtung 6 das Drehmoment-Anforderungssignal T_{req} als überprüftes Drehmoment-Anforderungssignal PT_{req} aus. Wenn hingegen der Fehlerzustand festgestellt wurde, wählt die Auswahleinrichtung 10 der Überprüfungseinrichtung 6 ein Referenz-Drehmomentsignal T_{ref} als überprüftes Drehmoment-Anforderungssignal PT_{req} aus. Das Referenz-Drehmomentsignal T_{ref} wird von der Überprüfungseinrichtung 6 mittels eines Referenzreglers 7 basierend zumindest auf der Regelabweichung e bestimmt. Schließlich wird das überprüfte Drehmoment-Anforderungssignal PT_{req} an den Lenksteller 2 übermittelt.

Wie in Fig. 2 und 3 schematisch dargestellt kann die kumulierte Abweichungsgröße unter Gewichtung der Regelabweichung e mit einer Fahrgeschwindigkeit v des Fahrzeugs berechnet werden. Dadurch wird eine kontinuierliche Fahrspurabweichungsdiagnose ermöglicht, da die mit der momentanen Fahrgeschwindigkeit v gewichtete Regelabweichung e ein Maß für die durch die Regelabweichung verursachte Fahrspurabweichung darstellt. Die kumulierte Abweichungsgröße kann beispielsweise basierend auf einem einfachen Fahrzeugmodell berechnet werden. Denkbar ist es die kumulierte Abweichungsgröße als Integral über die Regelabweichung e multipliziert mit der Fahrzeuggeschwindigkeit v. Auf diese Weise erhält man als kumulierte Abweichungsgröße eine Länge, die mit der tatsächlichen Fahrspurabweichung korreliert. Die geschwindigkeitsabhängige Berechnung der Fahrspurabweichung auf Grundlage der Fahrzeugbewegung ermöglicht es die absolute Entfernung des Fahrzeugs von der gewünschten Fahrspur allein auf Grundlage der Regelabweichung und der Fahrgeschwindigkeit zu berechnen.

Bevorzugt kann die kumulierte Abweichungsgröße auch als Integral über die Regelabweichung e multipliziert mit dem Quadrat (oder einer höheren Potenz) der Fahrzeuggeschwindigkeit v berechnet werden. Durch diese stärkere Gewichtung der Fahrzeuggeschwindigkeit v kann vorteilhaft erreicht werden, dass Fahrspurabweichungen bei höheren Fahrzeuggeschwindigkeiten durch frühzeitiges Eingreifen der Überprüfungseinrichtung 6 in die Regelung schneller ausgeregelt werden.

Die Regelabweichung e kann bei der Bestimmung der kumulierten Abweichungsgröße aber auch anders gewichtet werden, um das Ansprechverhalten der Überprüfungsvorrichtung 6 zu beeinflussen. In diesem Fall kann sich das berechnete Integral von der tatsächlichen Fahrspurabweichung verschieden und/oder zu dieser in einem nichtlinearen Zusammenhang stehen.

Die Integrationszeit des Zeitintegrals kann beliebig lang gewählt werden. Beispielsweise kann die Abweichungsgröße für den gesamten Zeitraum seit einem vorangegangenen Umschalten der Auswahleinrichtung 10 kumuliert werden. Alternativ kann ein gleitendes Integrationsintervall mit wählbarer Dauer verwendet werden.

Vorzugsweise wird der Fehlerzustand des Stellungsreglers 5 festgestellt, wenn die kumulierte Abweichungsgröße einen wählbaren Schwellenwert überschreitet. Besonders bevorzugt wird der Schwellenwert abhängig von der Fahrgeschwindigkeit v des Fahrzeugs gewählt. Hierdurch können aktive Lenkassistenten bei unterschiedlichen Fahrgeschwindigkeiten in unterschiedlichem Maße toleriert werden. Bei hohen Geschwindigkeiten darf beispielsweise nur der Lenkeingriff eines Spurhalteassistenten für einen gewissen Zeitraum toleriert werden, während bei niedrigen Geschwindigkeiten sogar die Tolerierung der durch einen Einparkassistenten verursachten Fahrspurabweichung vorteilhaft sein kann.

Wie in Fig. 3 dargestellt wird vorzugsweise eine momentane Winkelgeschwindigkeit ω des Lenkstellers 2 bei der Bestimmung des Referenz-Drehmomentsignals T_{ref} berücksichtigt. Durch Berücksichtigung der Winkelgeschwindigkeit ω im Referenzregler 7 kann ein Dämpfungsterm in die Regelung aufgenommen werden, der schnellen Veränderungen des Ist-Stellwinkels α entgegenwirkt. Dadurch kann das für die Dämpfung von plötzlich auftretenden, den Ist-Stellwinkels α verändernden Störkräften erforderliche Drehmoment bei der Berechnung des Referenz-Drehmomentsignals T_{ref} berücksichtigt werden.

Vorzugsweise weist der Stellungsregler 5 eine höhere Bandbreite auf als der Referenzregler 7. Durch die höhere Bandbreite des Stellungsreglers 5 kann die Steuerung des Steer-by-Wire-Lenksystems im Normalbetrieb auch höherfrequente Störeinflüsse ausregeln. Für den Fall, dass derartige Störeinflüsse oder ein fehlerhafter Betrieb des Stellungsreglers 5 zu einer Instabilität in der Regelstrecke durch Aufschaukeln der Fahrspurabweichungen führt, fällt die Steuerung über den Referenzregler 7 mit niedrigerer Bandbreite auf eine robuste und sichere Regelung mit tolerierbarer Regelabweichung e zurück. Es kann daher ausreichend sein, einen Referenzregler 7 mit einer gegenüber dem Stellungsregler 5 geringeren Leistungsfähigkeit zu verwenden.

Wie in Fig. 3 dargestellt wird im Referenzregler 7 die Regelabweichung e als Differenz aus Soll-Lenkwinkel α und Ist-Lenkwinkel β bestimmt und der Berechnungseinheit 11 zugeführt. Innerhalb des Referenzregler 7 wird die Regelabweichung e weiterhin vorzugsweise linear verstärkt und zur Bestimmung des Referenz-Drehmomentsignals T_{ref} mit einem von der Winkelgeschwindigkeit ω abhängigen Signalanteil summiert. Das Referenz-Drehmomentsignal T_{ref} enthält somit vorzugsweise einen zur Differenz des Soll-Lenkwinkels β und des Ist-Lenkwinkels α proportionalen Anteil und einen von der Winkelgeschwindigkeit ω des Lenkstellers 2 abhängigen Anteil.

Der Referenzregler 7 kann zur Verringerung der Regelabweichung e optimiert angepasst werden. Hierzu können beispielsweise die beiden vorgenannten Signalanteile so zueinander gewichtet werden, dass die in bestimmten Fahrsituationen auftretenden Regelabweichungen e minimiert werden.

Nachdem die Auswahleinrichtung 10 das überprüfte Drehmoment-Anforderungssignal PT_{req} auf das vom Referenzregler 7 bereitgestellte Referenz-Drehmomentsignal T_{ref} umgestellt hat, kann vorgesehen sein, dass das Referenz-Drehmomentsignal T_{ref} bis zum Ende der Betriebsphase (also beispielsweise bis zum Abschalten der Zündung) verwendet wird, um den Lenksteller 2 anzusteuern.

Alternativ kann das überprüfte Drehmoment-Anforderungssignal PT_{req} zu einem späteren Zeitpunkt wieder auf das Drehmoment-Anforderungssignal T_{req} zurückgeschaltet werden. Beispielsweise kann die Auswahleinrichtung 10 von dem Referenz-Drehmomentsignal T_{ref} auf das Drehmoment-Anforderungssignal T_{req} als überprüftes Drehmoment-Anforderungssignal PT_{req} bei Ablauf eines vorbestimmten Zeitraums nach Feststellung des Fehlerzustands zurückschalten. Alternativ oder zusätzlich dazu kann die Auswahleinrichtung 10 auch von dem Referenz-Drehmomentsignal T_{ref} auf das Drehmoment-Anforderungssignal T_{req} als überprüftes Drehmoment-Anforderungssignal PT_{req} zurückschalten, wenn das Referenz-Drehmomentsignal T_{ref} und/oder das Drehmoment-Anforderungssignal T_{req} unter einen vorgebbaren Schwellenwert fällt. Durch diese Bedingung findet das Zurückschalten nur zu Zeitpunkten statt in denen kein oder nur ein geringfügiges Lenkmoment aufgebracht wird, so dass ein besonders sicheres Zurückschalten ohne eine sprunghafte Veränderung des Lenkmoments ermöglicht wird.

Das Zurückschalten kann ferner von der zusätzlichen oder alternativen Bedingung abhängig sein, dass die kumulierte Abweichungsgröße unter einen vorgebbaren zweiten Schwellenwert fällt.

Ferner kann vorgesehen sein, dass die-Auswahleinrichtung 10 während der Umschaltvorgänge das überprüfte Drehmoment-Anforderungssignal PT_{req} zwischen dem Referenz-Drehmomentsignal T_{ref} und dem Drehmoment-Anforderungssignal T_{req} interpoliert. Hierdurch kann sowohl beim Eingreifen des Referenzreglers 7 als auch beim Zurückschalten auf den Stellungsregler 5 ein sanfter Übergang erzielt werden, wodurch der Lenkeingriff für den Fahrer unbemerkt erfolgen kann.

### Bezugszeichenliste

- 1: Steer-by-Wire-Lenksystem
- 2: Lenksteller
- 3: Feedback-Aktuator
- 4: Ansteuereinheit
- 5: Stellungsregler
- 6: Überprüfungseinrichtung
- 7: Referenzregler
- 10: Auswahleinrichtung
- 11: Berechnungseinheit

- α: Ist-Lenkwinkel
- β: Soll-Lenkwinkel
- ω: Winkelgeschwindigkeit
- e: Regelabweichung
- v: Fahrgeschwindigkeit
- T_{req}: Drehmoment-Anforderungssignal
- T_{ref}: Referenz-Drehmomentsignal
- PT_{req}: überprüftes Drehmoment-Anforderungssignal
- T_{L}: Lenkmoment
- F_{Last}: Lenklast

## Patentansprüche

1. Verfahren zur Steuerung eines Steer-by-Wire-Lenksystems (1) für ein Kraftfahrzeug umfassend einen auf gelenkte Räder wirkenden elektronisch regelbaren Lenksteller (2), der einen Ist-Lenkwinkel (α) der gelenkten Räder erfasst, einen Feedback-Aktuator (3), der einen über ein Lenkrad eingestellten Soll-Lenkwinkel (β) erfasst, und eine Ansteuereinheit (4), die den Lenksteller (2) in Abhängigkeit des Soll-Lenkwinkels (β) und des Ist-Lenkwinkels (α) mit einem überprüften Drehmoment-Anforderungssignal (PT_{req}) ansteuert,
wobei das Verfahren die folgenden Schritte umfasst:
- Bestimmen eines Drehmoment-Anforderungssignals (T_{req}) durch einen Stellungsregler (5) der Ansteuereinheit (4) basierend zumindest auf dem Soll-Lenkwinkel (β) und dem Ist-Lenkwinkel (α),
- Überprüfen durch eine Überprüfungseinrichtung (6) der Ansteuereinheit (4), ob ein Fehlerzustand des Stellungsreglers (5) vorliegt,
- Auswählen des Drehmoment-Anforderungssignals (T_{req}) als überprüftes Drehmoment-Anforderungssignal (PT_{req}) durch eine Auswahleinrichtung (10) der Überprüfungseinrichtung (6), wenn der Fehlerzustand nicht festgestellt wurde,
- Auswählen eines Referenz-Drehmomentsignals (T_{ref}) als überprüftes Drehmoment-Anforderungssignal (PT_{req}) durch eine Auswahleinrichtung (10) der Überprüfungseinrichtung (6), wenn der Fehlerzustand festgestellt wurde,
- Übermitteln des überprüften Drehmoment-Anforderungssignals (PT_{req}) an den Lenksteller (2),
**dadurch gekennzeichnet, dass** die Überprüfungseinrichtung (6) durch Auswertung einer kumulierten Abweichungsgröße, die von einer Berechnungseinheit (11) der Überprüfungseinrichtung (6) als Zeitintegral über eine Regelabweichung (e) zwischen Soll-Lenkwinkel (β) und Ist-Lenkwinkel (α) berechnet wird, feststellt, ob der Fehlerzustand vorliegt, und das Referenz-Drehmomentsignal (T_{ref}) mittels eines Referenzreglers (7) basierend zumindest auf der Regelabweichung (e) bestimmt.

2. Verfahren nach Anspruch 1, **dadurch gekennzeichnet, dass** die kumulierte Abweichungsgröße unter Gewichtung der Regelabweichung (e) mit einer Fahrgeschwindigkeit (v) des Fahrzeugs berechnet wird.

3. Verfahren nach Anspruch 1 oder 2, **dadurch gekennzeichnet, dass** der Fehlerzustand des Stellungsreglers (5) festgestellt wird, wenn die kumulierte Abweichungsgrö-ße einen wählbaren Schwellenwert überschreitet.

4. Verfahren nach Anspruch 3, **dadurch gekennzeichnet, dass** der Schwellenwert abhängig von der Fahrgeschwindigkeit (v) des Fahrzeugs gewählt wird.

5. Verfahren nach einem der Ansprüche 1 bis 4, **dadurch gekennzeichnet, dass** bei der Bestimmung des Referenz-Drehmomentsignals (T_{ref}) durch den Referenzregler (7) eine momentane Winkelgeschwindigkeit (ω) des Lenkstellers (2) berücksichtigt wird.

6. Verfahren nach Anspruch 5, **dadurch gekennzeichnet, dass** das Referenz-Drehmomentsignal (T_{ref}) einen zu der Regelabweichung (e) proportionalen Anteil und einen von der Winkelgeschwindigkeit (ω) des Lenkstellers (2) abhängigen Anteil enthält.

7. Verfahren nach einem der Ansprüche 1 bis 6, **dadurch gekennzeichnet, dass** die Auswahleinrichtung (10) von dem Referenz-Drehmomentsignal (T_{ref}) auf das Drehmoment-Anforderungssignal (T_{req}) als überprüftes Drehmoment-Anforderungssignal (PT_{req}) bei Ablauf eines vorbestimmten Zeitraums nach Feststellung des Fehlerzustands zurückschaltet.

8. Verfahren nach einem der Ansprüche 1 bis 7, **dadurch gekennzeichnet, dass** die Auswahleinrichtung (10) von dem Referenz-Drehmomentsignal (T_{ref}) auf das Drehmoment-Anforderungssignal (T_{req}) als überprüftes Drehmoment-Anforderungssignal (PT_{req}) zurückschaltet, wenn das Referenz-Drehmomentsignal (T_{ref}) und/oder das Drehmoment-Anforderungssignal (T_{req}) unter einen vorgebbaren Schwellenwert fällt.

9. Verfahren nach einem der Ansprüche 1 bis 8, **dadurch gekennzeichnet, dass** dieAuswahleinrichtung (10) während der Umschaltvorgänge das überprüfte Drehmoment-Anforderungssignal (PT_{req}) zwischen dem Referenz-Drehmomentsignal (T_{ref}) und dem Drehmoment-Anforderungssignal (T_{req}) interpoliert.

10. Steer-by-Wire-Lenksystem (1) für ein Kraftfahrzeug umfassend:
- einen auf gelenkte Räder wirkenden elektronisch regelbaren Lenksteller (2), über den ein Ist-Lenkwinkel (α) der gelenkten Räder erfassbar ist,
- ein Feedback-Aktuator (3), mit dem ein über ein Lenkrad einstellbarer Soll-Lenkwinkel (β) erfassbar ist, und
- eine Ansteuereinheit (4) zur Ansteuerung des Lenkstellers (2) in Abhängigkeit des Soll-Lenkwinkels (β) und des Ist-Lenkwinkels (α) mittels eines überprüften Drehmoment-Anforderungssignals (PT_{req}),
wobei die Ansteuereinheit (4) einen Stellungsregler (5) und eine Überprüfungseinrichtung (6) mit einer Auswahleinrichtung (10) enthält, **dadurch gekennzeichnet, dass** die Überprüfungseinrichtung (6) einen Referenzregler (7) und eine Berechnungseinheit (11) enthält und dazu ausgebildet ist, das Verfahren nach einem der Ansprüche 1 bis 9 auszuführen.

## Claims

1. A method for controlling a steer-by-wire steering system (1) for a motor vehicle comprising an electronically controllable steering actuator (2) which acts on steered wheels and which detects an actual steering angle (α) of the steered wheels, a feedback actuator (3) which detects a desired steering angle (β) set via a steering wheel, and an activation unit (4) which activates the steering actuator (2) in accordance with the desired steering angle (β) and the actual steering angle (α) with a checked torque request signal (PT_{req}),
wherein the method comprises the following steps:
- determining a torque request signal (T_{req}) by a position controller (5) of the activation unit (4) based at least on the desired steering angle (β) and the actual steering angle (α),
- checking by a checking device (6) of the activation unit (4) whether there is an error state of the position controller (5),
- selecting the torque request signal (T_{req}) as a checked torque request signal (PT_{req}) by a selection device (10) of the checking device (6) if the error state has not been determined,
- selecting a reference torque signal (T_{ref}) as a checked torque request signal (PT_{req}) by a selection device (10) of the checking device (6) if the error state has been determined,
- transmitting the checked torque request signal (PT_{req}) to the steering actuator (2),
**characterized in that,** by evaluating a cumulative deviation variable, which is calculated by a calculation unit (11) of the checking device (6) as a time integral over a control deviation (e) between the desired steering angle (β) and actual steering angle (α), the checking device (6) determines whether the error state is present and determines the reference torque signal (T_{ref}) by means of a reference controller (7) based at least on the control deviation (e).

2. The method as claimed in claim 1, **characterized in that** the cumulative deviation variable is calculated by weighting the control deviation (e) with a driving speed (v) of the vehicle.

3. The method as claimed in claim 1 or 2, **characterized in that** the error state of the position controller (5) is determined when the cumulative deviation variable exceeds a selectable threshold value.

4. The method as claimed in claim 3, **characterized in that** the threshold value is selected depending on the driving speed (v) of the vehicle.

5. The method as claimed in one of claims 1 to 4, **characterized in that** a momentary angular velocity (ω) of the steering actuator (2) is taken into account in the determining of the reference torque signal (T_{ref}) by the reference controller (7).

6. The method as claimed in claim 5, **characterized in that** the reference torque signal (T_{ref}) contains a component proportional to the control deviation (e) and a component dependent on the angular velocity (ω) of the steering actuator (2).

7. The method as claimed in one of claims 1 to 6, **characterized in that** the selection device (10) switches back from the reference torque signal (T_{ref}) to the torque request signal (T_{req}) as a checked torque request signal (PT_{req}) when a predetermined period of time has elapsed after the error state has been determined.

8. The method as claimed in one of claims 1 to 7, **characterized in that** the selection device (10) switches back from the reference torque signal (T_{ref}) to the torque request signal (T_{req}) as a checked torque request signal (PT_{req}) when the reference torque signal (T_{ref}) and/or the torque request signal (T_{req}) falls below a specifiable threshold value.

9. The method as claimed in one of claims 1 to 8, **characterized in that,** during the switching operations, the selection device (10) interpolates the checked torque request signal (PT_{req}) between the reference torque signal (T_{ref}) and the torque request signal (Treq).

10. A steer-by-wire steering system (1) for a motor vehicle, comprising:
- an electronically controllable steering actuator (2) which acts on steered wheels and via which an actual steering angle (α) of the steered wheels can be detected,
- a feedback actuator (3) with which a desired steering angle (β) set via a steering wheel is detectable, and
- an activation unit (4) for activating the steering actuator (2) in accordance with the desired steering angle (β) and the actual steering angle (α) by means of a checked torque request signal (PT_{req}),
wherein the activation unit (4) contains a position controller (5) and a checking device (6) with a selection device (10), **characterized in that** the checking device (6) contains a reference controller (7) and a calculation unit (11) and is designed to carry out the method as claimed in one of claims 1 to 9.

## Revendications

1. Procédé de commande d'un système de direction à commande électrique (1) pour un véhicule à moteur comprenant un actionneur de direction à commande électronique (2) qui agit sur les roues directrices et qui détecte un angle de direction réel (α) des roues directrices, un actionneur de rétroaction (3) qui détecte un angle de direction désiré (β) défini par l'intermédiaire d'un volant, et une unité d'activation (4) qui active l'actionneur de direction (2) en fonction de l'angle de direction désiré (β) et de l'angle de direction réel (α) à l'aide d'un signal de demande de couple contrôlé (PT_{req}),
dans lequel le procédé comprend les étapes suivantes :
- détermination d'un signal de demande de couple (T_{req}) par un contrôleur de position (5) de l'unité d'activation (4) sur la base au moins de l'angle de braquage désiré (β) et de l'angle de direction réel (α),
- vérification par un dispositif de contrôle (6) de l'unité d'activation (4) de l'existence d'un état d'erreur du régulateur de position (5),
- sélection du signal de demande de couple (T_{req}) comme signal de demande de couple vérifié (PT_{req}) par un dispositif de sélection (10) du dispositif de vérification (6) si l'état d'erreur n'a pas été déterminé,
- sélection d'un signal de couple de référence (T_{ref}) en tant que signal de demande de couple vérifié (PT_{req}) par un dispositif de sélection (10) du dispositif de vérification (6) si l'état d'erreur a été déterminé,
- transmission du signal de demande de couple vérifié (PT_{req}) à l'actionneur de direction (2),
**caractérisé en ce que,** en évaluant une variable d'écart cumulé, qui est calculée par une unité de calcul (11) du dispositif de contrôle (6) en tant qu'intégrale de temps sur un écart de contrôle (e) entre l'angle de direction désiré (β) et l'angle de direction réel (α), le dispositif de contrôle (6) détermine si l'état d'erreur est présent et détermine le signal de couple de référence (T_{ref}) au moyen d'un contrôleur de référence (7) en se basant au moins sur l'écart de contrôle (e).

2. Procédé selon la revendication 1, **caractérisée en ce que** la variable d'écart cumulé est calculée en pondérant l'écart de contrôle (e) par la vitesse de conduite (v) du véhicule.

3. Procédé selon la revendication 1 ou 2, **caractérisée en ce que** l'état d'erreur du contrôleur de position (5) est déterminé lorsque la variable d'écart cumulé dépasse une valeur seuil sélectionnable.

4. Procédé selon la revendication 3, **caractérisée en ce que** la valeur seuil est sélectionnée en fonction de la vitesse de conduite (v) du véhicule.

5. Procédé selon l'une des revendications 1 à 4, **caractérisé en ce qu'**une vitesse angulaire momentanée (ω) de l'actionneur de direction (2) est prise en compte dans la détermination du signal de couple de référence (T_{ref}) par le contrôleur de référence (7).

6. Procédé selon la revendication 5, **caractérisée en ce que** le signal de couple de référence (T_{ref}) contient une composante proportionnelle à l'écart de commande (e) et une composante dépendant de la vitesse angulaire (ω) de l'actionneur de direction (2).

7. Procédé selon l'une des revendications 1 à 6, **caractérisé en ce que** le dispositif de sélection (10) repasse du signal de couple de référence (T_{ref}) au signal de demande de couple (T_{req} ) en tant que signal de demande de couple vérifié (PT_{req}) lorsqu'une période de temps prédéterminée s'est écoulée après que l'état d'erreur a été déterminé.

8. Procédé selon l'une des revendications 1 à 7, **caractérisé en ce que** le dispositif de sélection (10) passe du signal de couple de référence (T_{ref}) au signal de demande de couple (T_{req}) en tant que signal de demande de couple vérifié (PT_{req}) lorsque le signal de couple de référence (T_{ref}) et/ou le signal de demande de couple (T_{req}) tombe en dessous d'une valeur seuil spécifiable.

9. Procédé selon l'une des revendications 1 à 8, **caractérisé en ce que,** pendant les opérations de commutation, le dispositif de sélection (10) interpole le signal de demande de couple vérifié (PT_{req}) entre le signal de couple de référence (T_{ref}) et le signal de demande de couple (T_{req}).

10. Système de direction à commande électrique (1) pour un véhicule automobile, comprenant :
- un actionneur de direction (2) à commande électronique qui agit sur les roues directrices et qui permet de détecter l'angle de direction réel (α) des roues directrices,
- un actionneur de rétroaction (3) permettant de détecter un angle de direction désiré (β) défini par l'intermédiaire d'un volant, et
- une unité d'activation (4) pour activer l'actionneur de direction (2) en fonction de l'angle de direction désiré (β) et de l'angle de direction réel (α) au moyen d'un signal de demande de couple contrôlé (PT _{req}),
dans lequel l'unité d'activation (4) contient un contrôleur de position (5) et un dispositif de contrôle (6) avec un dispositif de sélection (10), **caractérisé en ce que** le dispositif de contrôle (6) contient un contrôleur de référence (7) et une unité de calcul (11) et est conçu pour mettre en oeuvre la méthode telle que revendiquée dans l'une des revendications 1 à 9.
